(19) **Europäisches Patentamt European Patent Office Office européen des brevets**

(11) **EP 1 552 324 B1**

(12) **FASCICULE DE BREVET EUROPEEN**

(45) Date de publication et mention de la délivrance du brevet:
**12.02.2020 Bulletin 2020/07**

(21) Numéro de dépôt: **03775458.7**

(22) Date de dépôt: **01.10.2003**

(51) Int Cl.:
***G01V 1/28*** *(2006.01)*

(86) Numéro de dépôt international:
**PCT/FR2003/002874**

(87) Numéro de publication internationale:
**WO 2004/034090 (22.04.2004 Gazette 2004/17)**

(54) **MÉTHODE DE SÉPARATION DE SIGNAUX DE MICROSISMICITÉ DE SIGNAUX SISMIQUES ÉMIS PAR UNE OU PLUSIEURS SOURCES**

VERFAHREN ZUM TRENNEN MIKROSEISMISCHER SIGNALE VON SEISMISCHEN SIGNALEN, DIE DURCH EINE ODER MEHRERE QUELLEN EMITTIERT WERDEN

METHOD FOR SEPARATING MICROSEISMIC SIGNALS FROM SEISMIC SIGNALS EMITTED BY ONE OR SEVERAL SOURCES

(84) Etats contractants désignés:
**AT BE BG CH CY CZ DE DK EE ES FI FR GB GR HU IE IT LI LU MC NL PT RO SE SI SK TR**

(30) Priorité: **08.10.2002 FR 0212494**

(43) Date de publication de la demande:
**13.07.2005 Bulletin 2005/28**

(73) Titulaires:
• **IFP Energies nouvelles**
**92500 Rueil-Malmaison (FR)**
• **GDF SUEZ**
**75392 Paris Cedex 08 (FR)**
• **CGGVERITAS SERVICES SA**
**91341 Massy Cedex (FR)**

(72) Inventeurs:
• **MEUNIER, Julien**
**75013 Paris (FR)**
• **HUGUET, Frédéric**
**95470 Fosses (FR)**

(74) Mandataire: **Laget, Jean-Loup et al**
**Ipsilon**
**Le Centralis**
**63, avenue du Général Leclerc**
**92340 Bourg-la-Reine (FR)**

(56) Documents cités:
FR-A- 2 805 051     US-A- 5 377 104
US-A- 6 049 508     US-B1- 6 442 489

**Description**

L'invention concerne une méthode pour discriminer des signaux microsismiques induits par l'exploitation d'un gisement souterrain, parmi des signaux sismiques émis dans le cadre d'opérations de surveillance sismique

Pour suivre l'évolution d'un gisement souterrain en cours d'exploitation, il est connu d'implanter à poste fixe des sources sismiques et des récepteurs sismiques, en surface ou dans des puits, qu'il s'agisse de puits d'exploration ou d'exploitation du gisement et de procéder à intervalles de temps fixés à des opérations d'enregistrement des signaux sismiques émanant de la formation. Il peut s'agir de signaux sismiques induits par l'activité d'exploitation du site ou de signaux sismiques renvoyés par les discontinuités géologiques de la formation, en réponse à l'émission d'ébranlements dans le sol au moyen d'une ou plusieurs sources sismiques. La comparaison des enregistrements effectués à des instants différents de l'exploitation du site, fournit des données sur son évolution.

Différents systèmes de surveillance sismique à long terme sont décrits par exemple dans les brevets EP 591 037 (US 5 461 594), FR 2 593 292 (US 4 775 009), FR 2 728 973 (US 5 724 311) ou FR 2 775 349.

Par le brevet EP 748.457 (US 5 724 311) de deux des demandeurs, on connaît un système de surveillance permanente permettant d'obtenir une parfaite reproductibilité des conditions opératoires dans des opérations répétitives de surveillance sismique d'une zone souterraine traversée par au moins un puits ou forage, et notamment d'un réservoir souterrain de stockage de gaz. Ce système comporte, installés à poste fixe, un ou plusieurs ensemble(s) de récepteurs sismiques (enterrés en surface ou placés dans un ou plusieurs puits), plusieurs sources sismiques répétitives (enterrées ou en surface) ainsi que d'un réseau de liaison permanente pour l'alimentation sélective de ces sources en énergie. Une station centrale télécommande sélectivement chacune de ces sources, et enregistre les signaux sismiques émanant de la zone souterraine en réponse aux ondes sismiques transmises sélectivement dans le sol par les sources.

Grâce à cet ensemble de sources à poste fixe dont le couplage avec les terrains environnant reste stable, et à ce réseau d'alimentation au moins en partie enterré et dont l'aire d'emprise en surface est réduite, on peut mener toute une série d'opérations sismiques de surveillance de longue durée dans des conditions opératoires stables, sans risque d'incompatibilité avec les activités du chantier d'exploitation.

Par le brevet FR 2.775.349 (US 6 182 012) des deux mêmes demandeurs, on connaît une méthode et un dispositif de surveillance permanente d'une formation souterraine dans laquelle on forme des cavités pour des sources sismiques (de préférence assez profondes pour qu'elles soient couplées avec la formation au-dessous de la zone altérée (WZ)), on fore au moins un puits soit au-dessous de chacune des sources ou au voisinage immédiat de chacune d'elles. Dans chacun des puits ainsi forés, on descend une antenne constituée d'une pluralité de récepteurs sismiques (géophones, hydrophone, etc.) que l'on couple avec la formation environnante. Avec ce dispositif, on réalise des cycles d'émission-réception avec émission d'ondes sismiques dans la formation par au moins une source et acquisition des signaux captés par les récepteurs sismiques, en réponse aux ondes renvoyées par la formation. Les récepteurs peuvent par exemple être associés avec un tube de transfert de fluides descendu dans le puits, dans le but de relier une zone souterraine à un appareil d'exploitation en surface et couplés avec la formation environnant le puits.

Les différentes sources du dispositif de surveillance sismique peuvent être actionnées successivement, en ménageant entre les déclenchements un intervalle de temps suffisant pour recevoir les ondes renvoyées par la zone investiguée. On peut aussi utiliser plusieurs sources sismiques émettant les mêmes signaux que l'on déclenche simultanément pour augmenter la puissance émise.

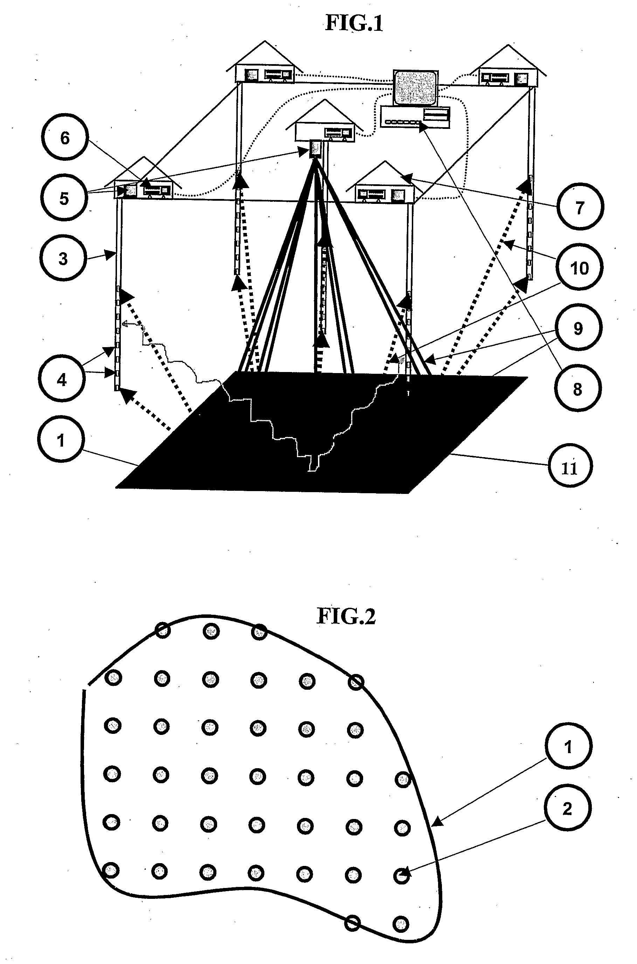

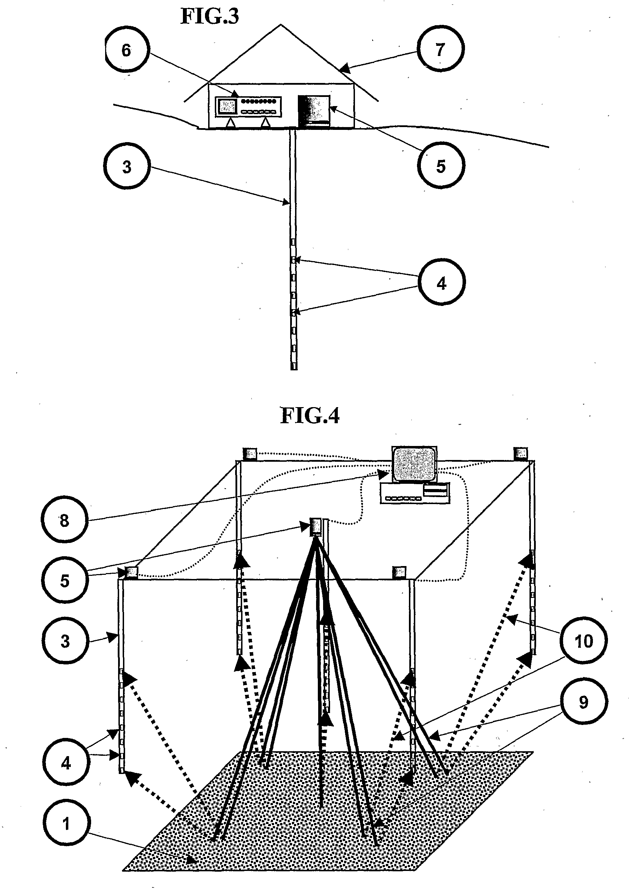

Par le brevet FR 2.805.051 des demandeurs, on connaît une méthode et un système de surveillance sismique d'une formation souterraine. Comme schématisés aux Fig.1 à 4, le système comporte par exemple un réseau d'antennes sismiques 2 constituées chacune d'un ensemble de capteurs sismiques 4 disposés à intervalles réguliers le long d'un puits 3 foré dans le sol. Ce réseau peut être régulier comme schématisé sur la Fig.2, ou irrégulier. Les capteurs sont par exemple des géophones mono-directionnels orientés verticalement ou multi-axes (triphones) et/ou des hydrophones. A proximité de chaque antenne 2, est disposée une source sismique 5. Comme sources, on utilise avantageusement des vibrateurs de type piézoélectrique, tels que décrit dans le brevet FR 2.791.780 (US 6.338.394) aux noms conjoints des demandeurs, qui sont installés à demeure au voisinage immédiat de chaque antenne 2. A chaque antenne peut être associé un module électronique de contrôle et d'enregistrement 6 (Fig.1). Ces modules électroniques 6 peuvent être reliés à un laboratoire central de commande et de synchronisation 8. Suivant un autre mode de mise en œuvre, schématisé sur la figure 4, les antennes 2 sont reliées directement à un laboratoire central 8 regroupant tous les modules électroniques individuels de contrôle et d'enregistrement 6 (Fig.1). US6442489 décrit aussi une méthode de surveillance sismique active prenant en compte les signaux de microsismicité.

Des ondes sismiques sont émises dans la formation souterraine par une ou plusieurs sources sismiques (vibrateurs) 5. Dans le cas de sources multiples, celles-ci émettent simultanément ; elles sont pilotées par des signaux orthogonaux les uns relativement aux autres, de manière à former un signal vibratoire composite. Les vibrateurs fonctionnent en permanence ou tout du moins sur une durée assez longue pour obtenir un rapport signal au bruit suffisant. Les ondes sismiques générées par les sources sismiques 5 se propagent vers le bas (ondes descendantes 9). Ces ondes incidentes sont tout d'abord enregistrées par les récepteurs 4 de chaque puits 3. Les ondes renvoyées par les discontinuités de la zone (interfaces sismiques) se propagent vers le haut. Ces ondes montantes 10 sont enregistrées aussi par les différents récepteurs 4. De la sorte, les ondes montantes et descendantes sont superposées sur les sismogrammes. On applique aux enregistrements les traitements usuels bien connus des gens de l'art convenant à ceux obtenus par la technique dite de PSV (Profils Sismiques Verticaux). Ensuite, on discrimine les contributions respectives des sources sismiques au signal vibratoire composite et on reconstruit les sismogrammes équivalents à ceux que l'on obtiendrait en actionnant séparément les sources sismiques. Comme signaux orthogonaux, on utilise par exemple des signaux sinusoïdaux de fréquences différentes les unes des autres aussi bien par leurs composantes fondamentales que par leurs harmoniques respectives, ou des signaux formés à base d'ondelettes, de polynômes de Legendre ou de séries aléatoires, etc.

Dans le cas notamment où les signaux orthogonaux émis sont des sinusoïdes, on réalise par exemple la discrimination des contributions respectives des sources sismiques, par détermination de l'amplitude et de la phase du signal vibratoire composite aux fréquences fondamentales des signaux de pilotage appliqués aux sources sismiques. Cette discrimination comporte par exemple une pondération des signaux enregistrés par un facteur de pondération (ou d'apodisation) en cloche et une détermination de l'amplitude et de la phase du signal composite, ou bien encore une sélection par transformée de Fourier, de raies du spectre complexe associées respectivement aux différents signaux pondérés. La reconstruction des sismogrammes correspondant spécifiquement aux différentes sources sismiques est effectuée par exemple en appliquant, après leur séparation, une transformée de Fourier inverse, aux raies associées respectivement aux différents signaux pondérés.

Par ailleurs, il est connu que l'exploitation des réservoirs induit des variations de contraintes mécaniques dans le réservoir et dans sa couverture. Ces variations de contrainte ont pour effet de générer des signaux sismiques se propageant dans les terrains. Les récepteurs des différentes antennes 2 vont enregistrer ces signaux (ondes montantes 11).

Comme les sources sismiques 5 sont situées beaucoup plus près des récepteurs 4 des antennes 2 que du réservoir et que l'énergie qu'elles émettent est bien plus intense que l'énergie des signaux microsismiques induits générés dans le réservoir, il en résulte que les signaux microsismiques sont généralement masqués et indécelables.

**La méthode selon l'invention**

La méthode selon l'invention définie par les revendications permet de séparer des signaux de microsismicité induite et des signaux sismiques multi-sources dans le cadre d'opérations de la surveillance d'une zone souterraine en cours d'exploitation.

Elle comporte l'émission d'ondes sismiques dans la formation en couplant avec elle une ou plusieurs sources sismiques. Dans ce dernier cas, celles-ci émettent simultanément des signaux orthogonaux les uns relativement aux autres, de manière à former un signal vibratoire composite, la réception des signaux renvoyés par la formation en réponse à l'émission des ondes sismiques, l'enregistrement des signaux reçus par au moins un capteur sismique et le traitement des signaux enregistrés pour séparer les contributions respectives des sources sismiques aux signaux reçus et reconstruire les sismogrammes équivalents à ceux que l'on obtiendrait en actionnant séparément les sources sismiques.

On sépare les signaux de microsismicité induite (sismique passive) des signaux sismiques émis essentiellement en isolant la contribution de chacune des sources par comparaison avec un modèle spectral de référence aux fréquences fondamentales émises et à leurs harmoniques respectives, et en reconstituant dans le domaine des temps les signaux de microsismicité induite et les signaux sismiques émis.

La contribution spectrale des signaux de microsismicité au spectre des signaux reçus est obtenue par exemple en retranchant les valeurs d'amplitude et de phase associées au modèle spectral de référence, de l'amplitude et de la phase du spectre associé aux enregistrements.

Suivant un mode de mise en œuvre, comme modèle spectral de référence, on utilise par exemple un modèle courant formé par mise à jour d'un modèle spectral prenant en compte la contribution de cycles d'enregistrement précédents.

Le modèle spectral courant peut être formé, en déterminant une valeur moyenne des spectres de fréquence formés à partir d'enregistrements (antérieurs et/ou postérieurs) obtenus pour la même source et les mêmes fréquences.

Suivant un autre mode de mise en œuvre, on forme le modèle spectral courant, en déterminant une valeur médiane des spectres de fréquence formés à partir d'enregistrements antérieurs obtenus pour la même source et les mêmes fréquences.

Suivant un autre mode de mise en œuvre, on forme le modèle spectral courant, par extrapolation ou interpolation à partir du spectre de fréquence à partir de valeurs spectrales voisines.

Suivant un autre mode de mise en œuvre, on forme le modèle spectral courant en utilisant la raie obtenue à cette fréquence.

Suivant un mode de mise en œuvre, la discrimination de signaux de microsismicité induite parmi des signaux émis dans le cadre d'opérations de surveillance sismique active est obtenue par les étapes suivantes :

a) pour chaque enregistrement n d'un cycle p d'enregistrement, on calcule les contributions respectives des différentes sources aux fréquences fondamentales ;

b) on calcule ensuite le rapport de la contribution à un modèle spectral courant formé par actualisation d'un modèle spectral précédent à partir de fréquences émises durant l'enregistrement précédent ainsi que de leurs harmoniques ;

c) on déduit la partie de l'enregistrement n du cycle p, que l'on peut associer aux opérations de surveillance sismique active ;

d) on déduit la partie de l'enregistrement n du cycle p, relevant proprement de l'activité microsismique passive ; et

e) on forme par inversion dans le domaine des temps, des contributions spectrales respectives de chacun des sources sismiques aux fréquences fondamentales et à leurs harmoniques, après complétion d'un cycle de mesures, les sismogrammes que l'on peut associer aux opérations de surveillance sismique active ; et

f) on forme par inversion dans le domaine des temps, à partir de la partie relevant de l'activité microsismique passive, les signaux microsismiques sous-jacents contenus dans les enregistrements.

La contribution spectrale est obtenue en multipliant une fonction de transfert entre une ondelette caractéristique de la source et un sismogramme associé à un récepteur donné, par une ondelette caractéristique de la source. Cette fonction de transfert peut être continuellement mise à jour au cours d'un cycle courant à partir d'une estimation faite au cours d'un cycle précédent et d'une estimation initiale faite au cours du cycle courant par la relation.

## Présentation sommaire des figures

Les caractéristiques et avantages de la méthode selon l'invention, apparaîtront plus clairement à la lecture de la description ci-après d'un exemple non limitatif de mise en oeuvre, en se référant aux dessins annexés où :

- la Fig.1 montre schématiquement le dispositif de surveillance mis en place sur le terrain pour surveiller sismiquement une formation souterraine ;

- la Fig.2 montre un mode de disposition des unités d'émission-réception sur le terrain ;

- la Fig.3 montre schématiquement une de ces unités d'émission-réception comprenant une source sismique et une antenne de réception ;

- la Fig.4 montre une variante du dispositif de surveillance de la Fig. 1 ; et

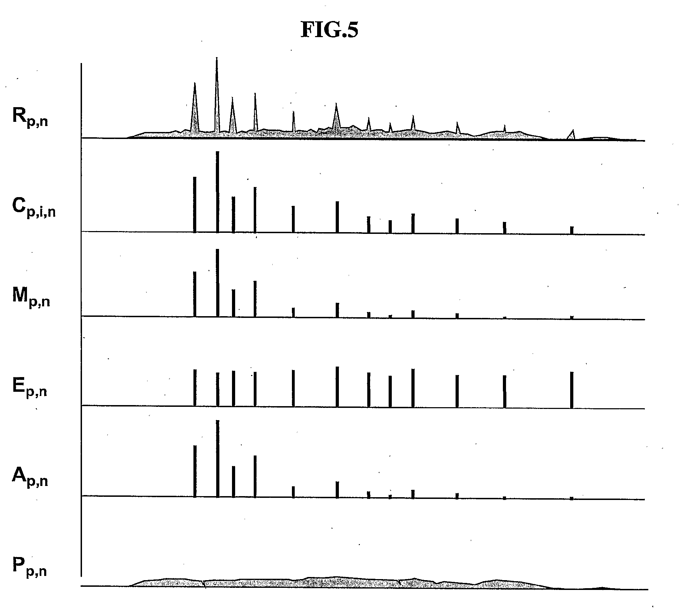

- la Fig.5 montre des exemples de signaux et spectres de fréquence mentionnés dans le cours de la description.

## Description détaillée

La méthode permet donc de réaliser des opérations de surveillance sismique d'une zone souterraine en utilisant un ensemble de capteurs sismiques et une ou plusieurs sources sismiques vibratoires. Dans le cas d'utilisation de plusieurs sources simultanées, celles-ci sont actionnées simultanément par des signaux à des fréquences différentes choisies de façon que l'on puisse discriminer les contributions de chaque source sur les sismogrammes obtenus à partir des signaux reçus et enregistrés.

Ceci est réalisé d'une façon générale par le pilotage des différentes sources par des sinusoïdes de fréquences différentes et par utilisation de techniques de calcul numérique connues telles que la transformée de Fourier inverse pour séparer les contributions aux sismogrammes obtenus des différentes sources sismiques.

La distorsion ne peut être négligée avec des sources mécaniques. En même temps qu'une fréquence $f_i$, une même source $S_i$ émet les fréquences $2f_i$, $3f_i$ ... $nf_i$. En conséquence, si $f_i$ et $f_j$ sont les fréquences respectives des deux sources Si et Sj de l'ensemble de sources, il convient si on veut séparer leurs contributions respectives non seulement que $f_i \neq f_j$ mais aussi que $f_i \neq 2f_j$, $f_i \# 3f_j$ , ... $f_i \neq nf_j$.

Comme déjà décrit dans le brevet FR 2.805.051 précité, si on émet le signal composite $P_t$ constitué de la somme de N sinusoïdes $\{f_i, A_i, \Phi_i\}$ avec $1 \leq i \leq N$, toutes les fréquences étant contenues dans une bande spectrale comprise entre deux fréquences limites $f_b$ et $f_f$, le sismogramme Tt observé au point R aura pour transformée de Fourier à la fréquence $f_i$, le nombre de module $A_i$ et de phase $\Phi_i$ égaux à l'amplitude et à la phase de la sinusoïde $T_i$. On peut ainsi, en émettant successivement toutes les sinusoïdes de fréquences $f_b$ à $f_f$, reconstruire par transformée de Fourier inverse le sismogramme Tt.

Dans le cas où, par exemple, toutes les amplitudes $A_i$ sont égales à 1 et toutes les phases $\Phi_i$ sont nulles, le signal $P_t$ obtenu est très proche de celui résultant de l'auto-corrélation d'un signal à fréquence glissante variant dans l'intervalle $[f_b - f_f]$ (sweep), utilisé couramment en vibrosismique. D'après la théorie de la transformée de Fourier discrète, bien connue des gens de l'art, si l'on désire écouter la source $S_1$ pendant le temps $t_e$, l'incrément de fréquence entre les sinusoïdes est $\Delta f = 1/t_e$ et le nombre de sinusoïdes nécessaires est $N_f = (f_f - f_b)t_e$.

On peut donc exciter simultanément N vibrateurs S1, S2, Si,... $S_N$ installés sur le terrain au moyen de signaux vibratoires de fréquences telles que chaque source est excitée successivement par chacune des $N_f$ sinusoïdes ci-dessus à chaque instant, sous réserve que les fréquences respectives des sinusoïdes émises à un même instant par les différentes sources sismiques sont toutes différentes les unes des autres. On réalise ainsi avec chaque vibrateur $N_f$ enregistrements correspondant aux $N_f$ fréquences sélectionnées dans l'intervalle de balayage. La séparation des signaux reçus par les capteurs sur le terrain, en réponse à l'émission simultanée des différents signaux est ainsi obtenue par sélection de la raie à la fréquence appropriée.

On répète ainsi des cycles de $N_f$ enregistrements. L'enregistrement $E_n$ d'un cycle d'acquisition donné contient un ensemble de fréquences fondamentales et harmoniques qui ne dépend que de n. Partant de cette observation, la méthode que l'on va appliquer pour détecter les effets de la microsismicité, repose sur le constat vérifié dans la pratique, que les variations d'amplitude et de phase observées à la fréquence f et à l'instant t sont très peu différentes de celles observées à la fréquence $f - \Delta f$ et à l'instant $t - \Delta t$. Cela permet de former un modèle spectral cumulatif construit à partir d'enregistrements de cycles précédents aux mêmes fréquences mais formé donc sur un temps long pendant lequel les caractéristiques des signaux sismiques émis sont susceptibles de varier, et adapté en permanence à partir d'enregistrements obtenus pendant une période suffisamment courte pour que les variations de signal puissent être négligées L'efficacité de la méthode proposée est optimale quand les fréquences successives émises par une même source s'incrémentent régulièrement. On pourra, par exemple, alterner des cycles en fréquences montantes et en fréquences descendantes.

Pour parvenir dans la pratique à la mise en évidence de cette contribution spectrale des signaux microsismiques sous-jacents, on va procéder comme suit.

Notations :

▪ $f_{i,n}$, va désigner la fréquence fondamentale émise par la source i pendant l'enregistrement n (cette fréquence est indépendante du cycle) ;

Pour simplifier les notations des grandeurs suivantes, l'indice désignant le numéro du récepteur est omis. Quel que soit celui-ci, les grandeurs sont calculées de la même manière.

- ▪ $R_{p,n}$      va désigner l'enregistrement de rang n du cycle p ;
- ▪ $C_{p,i,n}$,      la contribution de la source i à l'enregistrement n du cycle p ;
- ▪ $M_{p,n}$,      le modèle initial de la partie active de l'enregistrement n du cycle p. Ce modèle ne contient que les fréquences émises ainsi que leurs harmoniques pendant l'enregistrement n ;
- ▪ $E_{p,n}$,      le rapport entre les contributions actives de l'enregistrement n du cycle p et le modèle initial de la partie active de l'enregistrement n du cycle p ;
- ▪ $A_{p,n}$,      la partie active de l'enregistrement n du cycle p ;
- ▪ $P_{p,n}$,      la partie passive de l'enregistrement n du cycle p (microsismique) ;
- ▪ k      le coefficient d'actualisation des écarts (typiquement de l'ordre de 15 à 25%) ;
- ▪ h      le coefficient d'actualisation des modèles (typiquement de l'ordre de 5 à 10%).

Compte tenu de ces notations, la méthode consiste dans un premier temps, pour chaque enregistrement n du cycle p, au calcul des contributions respectives $C_{p,i,n}$ des différentes sources aux fréquences fondamentales ainsi qu'à leurs harmoniques par la méthode décrite dans le brevet FR 2.805.051 précité. Du fait de la présence éventuelle d'énergie microsismique, la contribution des différentes sources est susceptible d'être bruitée.

On peut améliorer cette estimation en associant les contributions de tous les récepteurs d'un même enregistrement $C_{p,i,n}$. Ces contributions peuvent être considérées comme le produit de deux facteurs dont l'un ne dépend que de la source (et non du récepteur) et l'autre du récepteur et non de la source.

Si l'indice r représente le récepteur,

$$C_{p,i,n,r} = S_{p,i,n} T_{p,i,n,r}$$

T ne dépend de p, i et n que par la variation des caractéristiques du récepteur et de son environnement avec le temps. Ces variations sont très lentes et peuvent être négligées ou estimées de façon plus précise.

S et T sont déterminés à un facteur près. On peut ainsi choisir pour $S_{p,i,n}$ la moyenne des ondes descendantes. Cette moyenne est obtenue par un calcul bien connu de ceux qui traitent les PSV (mise à plat des ondes descendantes et moyenne). Les $T_{p,i,n,r}$ sont alors les fonctions de transfert entre l'onde descendante et le sismogramme.

Dans le cas où l'on désire prendre en compte la variation de T, on peut utiliser par exemple le coefficient d'actualisation h pour mettre à jour $T_{p,i,n,r}$ à partir de $T_{p,i,n-1,r}$ en procédant de la manière suivante :
Si $Co_{p,i,n,r}$ désigne l'estimation initiale de la contribution C et $To_{p,i,n,r}$ celle du facteur récepteur, on calcule S par mise à plat et moyenne des ondes descendantes puis $To_{p,i,n,r}$ par la relation :

$$To_{p,i,n,r} = \frac{Co_{p,i,n}}{S_{p,i,n}}$$

On obtient l'estimation finale du facteur récepteur par :

$$T_{p,i,n,r} = (1-h)T_{p,i,n-1,r} + hTo_{p,i,n,r}$$

et la contribution finale de la source i au cycle p de l'enregistrement n par :

$$C_{p,i,n,r} = S_{p,i,n} T_{p,i,n,r}$$

On calcule ensuite le rapport $E_{p,n}$ de l'enregistrement courant au modèle spectral par la relation :

$$E_{p,n} = (1-k)E_{p,n-1} + k\frac{\sum C_{p,i,n}}{M_{p,n}}$$

Ce calcul nécessite la connaissance de $M_{p,n}$ dont le calcul décrit ci-dessous est effectué lors du cycle p-1. Il comporte un lissage sur les fréquences précédentes de façon à limiter l'effet de l'énergie microsismique dans son estimation. La formule proposée n'utilise que les enregistrements précédents et autorise donc le temps réel. Dans les cas difficiles, on peut remplacer cette somme par une moyenne ou une médiane courante. Il faut alors travailler en temps différé (le temps nécessaire à réaliser la seconde moitié des enregistrements utilisés dans le calcul de la moyenne).
Si $M_{p+1,n}$ représente le modèle initial de la partie active de l'enregistrement n du cycle p+1, alors :

$$M_{p+1,n} = (1-h)M_{p,n} + h\sum E_{p,n-1}C_{p,i,n-1}$$

Ce modèle consiste essentiellement en une moyenne pondérée de la contribution courante et des contributions précédentes. La formule utilisée autorise la variation du modèle : la contribution du cycle p-q au modèle utilisé pour le cycle p est multipliée par le coefficient $(1-h)^q$ qui tend vers zéro d'autant plus vite que h est voisin de 1. Cela permet au modèle $M_{p,n}$ de suivre les variations saisonnières, et aux rapports $E_{p,n}$ de ne refléter que les variations journalières.c) Connaissant le modèle spectral $M_{p,n}$ ainsi que le rapport $E_{p,n}$ de la contribution au modèle précédemment établie, on en déduit la partie $A_{p,n}$ de l'enregistrement n du cycle p, relevant de la sismique active Partie active :

$$A_{p,n} = M_{p,n} E_{p,n}$$

De la même façon la partie $P_{p,n}$ de l'enregistrement n du cycle p, relevant proprement de l'activité microsismique (passive) se calcule par la relation :

$$P_{p,n} = R_{p,n} - A_{p,n}$$

Les contributions spectrales respectives $C_{p,i,n}$ de chacune des sources Si aux fréquences fondamentales et à leurs harmoniques, après complétion d'un cycle de mesures fournissent par FFT inverse, les sismogrammes (dans le domaine des temps) utilisés dans le cadre de l'exploitation active.

Par FFT inverse, à partir de la partie $P_{p,n}$ relevant de contributions passives, on obtient l'estimation de l'activité microsismique sous-jacente contenue dans l'enregistrement $R_{p,n}$.

La mise à jour du rapport $E_{p,n}$ entre la contribution courante et le modèle spectral $M_{p,n}$, est effectuée de façon relativement rapide de façon à permettre des variations rapides du signal. La mise à jour du modèle initial s'effectue de façon beaucoup plus lente ; en fait le modèle initial pourrait ne pas être mis à jour.

L'intérêt de ces mises à jour est d'optimiser l'estimation du signal actif quand ses variations ne peuvent être contrôlées (variations saisonnières et journalières). Dans les cas les plus favorables, elles ne sont pas nécessaires et l'estimation de la partie active se réduira au modèle initial.

Une autre simplification possible est de négliger le bruit sismique aux fréquences émises (et, si besoin, aux harmoniques de ces fréquences). On ne se préoccupe plus d'estimer la partie active et on se contente, pour obtenir la partie passive, d'annuler ou d'interpoler les raies correspondant aux fréquences émises (et, s'il le faut, celles de leurs harmoniques).

Dans un premier temps, on supprime les raies harmoniques du spectre de fréquence de chaque signal enregistré et on interpole l'amplitude et la phase aux valeurs de raie à la fréquence de la source ; et puis on reconstitue par inversion l'enregistrement non affecté par les émissions des sources contenant éventuellement un signal microsismique. Ce mode de mise en œuvre convient plutôt dans le cas d'un nombre de sources peu élevé et/ou présentant une variabilité importante du signal avec le temps.

**Revendications**

1. Méthode de surveillance sismique active d'une formation souterraine (1) permettant une séparation de signaux de microsismicité induite de signaux sismiques émis dans le cadre d'opérations de surveillance sismique active de ladite formation souterraine en cours d'exploitation, comportant la réalisation de cycles d'enregistrement sismique avec émission d'ondes sismiques dans la formation en couplant avec elle au moins une source sismique (Si), la réception des signaux renvoyés par la formation en réponse à l'émission des ondes sismiques, l'enregistrement des signaux reçus par au moins un capteur sismique (2), **caractérisée en ce que** les signaux de microsismicité induite et les signaux sismiques émis sont obtenus seulement pendant l'opération de surveillance sismique active, et **en ce que** :

   - on forme un modèle spectral de référence à partir d'une moyenne pondérée d'une contribution spectrale de ladite source sismique (Si) pour le cycle courant et de contributions spectrales de ladite source sismique (Si) pour les cycles d'enregistrements précédents, aux fréquences fondamentales émises et à leurs harmoniques respectives ;
   - on sépare sur les enregistrements les signaux de microsismicité induite des signaux sismiques résultant des opérations de surveillance active, en isolant leur contribution par comparaison avec ledit modèle spectral de référence ; et
   - on reconstitue par inversion dans le domaine des temps les signaux de microsismicité.

2. Méthode selon la revendication 1, dans laquelle on couple plusieurs sources sismiques (Si) qui émettent simultanément des signaux orthogonaux les uns relativement aux autres de manière à former un signal vibratoire composite, on traite des signaux enregistrés pour séparer les contributions respectives des sources sismiques aux signaux reçus et reconstruire les sismogrammes équivalents à ceux que l'on obtiendrait en actionnant séparément les sources sismiques

3. Méthode selon la revendication 1 ou 2, **caractérisée en ce que** la contribution spectrale des signaux de microsismicité au spectre des signaux reçus est obtenue en retranchant les valeurs d'amplitude et de phase associées audit modèle spectral de référence, de l'amplitude et de la phase du spectre associé aux enregistrements.

**4.** Méthode selon l'une des revendications précédentes, **caractérisée en ce que** l'on forme le modèle spectral courant par extrapolation ou interpolation à partir du spectre de fréquence à partir de valeurs spectrales voisines.

**5.** Méthode selon l'une des revendications 2 à 4, **caractérisée en ce qu'**elle comporte les étapes suivantes :

a) pour chaque enregistrement n d'un cycle p d'enregistrement, on calcule les contributions respectives ($C_{p,i,n}$) des différentes sources aux fréquences fondamentales ;

b) on calcule ensuite le rapport ($E_{p,n}$) de la contribution audit modèle spectral ($M_{p,n}$) courant formé par actualisation d'un modèle spectral précédent ($M_{p,n-1}$) à partir de fréquences émises durant l'enregistrement (n-1) précédent ainsi que de leurs harmoniques ;

c) on déduit la partie ($A_{p,n}$) de l'enregistrement n du cycle p, que l'on peut associer aux opérations de surveillance sismique active ;

d) on déduit la partie ($P_{p,n}$) de l'enregistrement n du cycle p, relevant proprement de l'activité microsismique passive ; et

e) on forme par inversion dans le domaine des temps, des contributions spectrales respectives ($C_{p,i,n}$) de chacun des sources sismiques (Si) aux fréquences fondamentales et à leurs harmoniques, après complétion d'un cycle de mesures, les sismogrammes que l'on peut associer aux opérations de surveillance sismique active ; et

f) on forme par inversion dans le domaine des temps, à partir de la partie ($P_{p,n}$) relevant de l'activité microsismique passive, les signaux microsismiques sous-jacents contenus dans les enregistrements.

**6.** Méthode selon la revendication 5, **caractérisée en ce que** la contribution spectrale ($C_{p,i,n}$) est obtenue en multipliant une fonction de transfert ($T_{p,i,n,r}$) entre une ondelette caractéristique de la source et un sismogramme associé au récepteur r, par une ondelette caractéristique de la source.

**7.** Méthode selon la revendication 6, **caractérisée en ce que** l'on met continuellement à jour la dite fonction de transfert.

**8.** Méthode selon la revendication 7, **caractérisée en ce que** la mise à jour de la dite fonction de transfert ($T_{p,i,n,r}$) est obtenue au cours d'un cycle courant à partir d'une estimation ($T_{p,i,n-1,r}$) faite au cours d'un cycle précédent et d'une estimation initiale ($To_{p,i,n,r}$) faite au cours du cycle courant par la relation avec h étant un coefficient d'actualisation :

$$T_{p,i,n,r} = (1-h)T_{p,i,n-1,r} + hTo_{p,i,n,r}$$

**Patentansprüche**

**1.** Verfahren zur aktiven seismischen Überwachung einer unterirdischen Formation (1), das es ermöglicht, induzierte mikroseismische Signale von seismischen Signalen zu trennen, die im Rahmen einer aktiven seismischen Überwachung der unterirdischen Formation ausgestrahlt werden, umfassend: Durchführen von seismischen Registrierzyklen unter Ausstrahlen seismischer Wellen in der Formation, wobei mit dieser mindestens eine seismische Quelle (Si) gekoppelt wird, Empfangen der von der Formation als Reaktion auf die Ausstrahlung der seismischen Wellen ausgestrahlten Signale, Registrieren der von mindestens einem Seismiksensor (2) empfangenen Signale, **dadurch gekennzeichnet, dass** die induzierten mikroseismischen Signale und die ausgestrahlten seismischen Signale ausschließlich während der aktiven seismischen Überwachung erhalten werden, und dass:

- ein Referenz-Spektralmodell aus einem gewichteten Mittelwert eines spektralen Beitrags der seismischen Quelle (Si) für den laufenden Zyklus und der spektralen Beiträge der seismischen Quelle (Si) für die vorangegangenen Registrierzyklen zu den ausgestrahlten Grundfrequenzen und ihren jeweiligen Harmonischen gebildet wird,

- auf den Registrierungen die induzierten mikroseismischen Signale von den aus der aktiven Überwachung resultierenden seismischen Signale trennt, indem man deren Beitrag durch einen Vergleich zum Referenz-Spektralmodell isoliert, und

- die mikroseismischen Signale durch Umkehrung in der Zeitdomäne wiederhergestellt werden.

**2.** Verfahren nach anspruch 1, wobei mehrere seismische Quellen (Si) gekoppelt werden, die gleichzeitig in Bezug aufeinander orthogonale Signale ausstrahlen, sodass ein zusammengesetztes Vibrationssignal gebildet wird, und die aufgenommenen Signale bearbeitet werden, um die jeweiligen Beiträge der seismischen Quellen zu den empfangenen Signalen zu trennen und Seismogramme zu rekonstruieren, die denjenigen gleichwertig sind, die sich aus einer getrennten Betätigung der seismischen Quellen ergeben würden.

3. Verfahren nach Anspruch 1 oder 2, **dadurch gekennzeichnet, dass** der spektrale Beitrag der mikroseismischen Signale zum Spektrum der empfangenen Signale sich aus der Subtraktion der dem Referenz-Spektralmodell zuzuordnenden Amplitude- und Phasenwerte von der Amplitude und Phase des den Aufnahmen zuzuordnenden Spektrums ergibt.

4. Verfahren nach einem der vorstehenden Ansprüche, **dadurch gekennzeichnet, dass** das laufende Spektralmodell durch Extra- oder Interpolation aus dem Frequenzspektrum aufgrund angrenzender Spektralwerte gebildet wird.

5. Verfahren nach einem der Ansprüche 2 - 4, **dadurch gekennzeichnet, dass** es die Schritte umfasst:

   a) Berechnen der jeweiligen Beiträge ($C_{p,i,n}$) der unterschiedlichen Quellen zu den Grundfrequenzen für jede Aufnahme n eines Registrierzyklus p,
   b) anschließendes Berechnen des Verhältnisses ($E_{p,n}$) des Beitrags zum laufenden Spektralmodell ($M_{p,n}$), das durch Aktualisieren eines vorangegangenen Spektralmodells ($M_{p,n-1}$) gebildet wird, aufgrund der bei der vorangegangenen Registrierung (n-1) ausgestrahlten Frequenzen und deren Harmonischen,
   c) Abziehen des Anteils ($A_{p,n}$) der Aufnahme n des Zyklus p, der auf die aktive seismische Überwachung zurückgeführt werden kann,
   d) Abziehen des Anteils ($P_{p,n}$) der Aufnahme n des Zyklus p, in dem ausschließlich passive mikroseismische Aktivität erhoben wird, und
   e) Bilden der Seismogramme, die der aktiven seismischen Überwachung zugeordnet werden können, durch Umkehren der jeweiligen spektralen Beiträge ($C_{p,i,n}$) jeder der seismischen Quellen ($S_i$) zu den Grundfrequenzen und deren Harmonischen in der Zeitdomäne nach Abschluss eines Messzyklus, und
   f) Bilden der den Aufnahmen zugrunde liegenden mikroseismischen Signale durch Umkehren in der Zeitdomäne aufgrund des Anteils ($P_{p,n}$), in dem passive mikroseismische Aktivität erhoben wird.

6. Verfahren nach Anspruch 5, **dadurch gekennzeichnet, dass** der spektrale Beitrag ($C_{p,i,n}$) durch Multiplizieren einer Übertragungsfunktion ($T_{p,i,n,r}$) zwischen einem charakteristischen Wavelet der Quelle und einem dem Empfänger r zugeordneten Seismogramm mit einem charakteristischen Wavelet der Quelle erhalten wird.

7. Verfahren nach Anspruch 6, **dadurch gekennzeichnet, dass** die Übertragungsfunktion kontinuierlich aktualisiert wird.

8. Verfahren nach Anspruch 7, **dadurch gekennzeichnet, dass** sich die Aktualisierung der Übertragungsfunktion ($T_{p,i,n,r}$) im Laufe eines laufenden Zyklus aus einer im Laufe eines vorangegangenen Zyklus vorgenommenen Schätzung ($T_{p,i,n-1,r}$) und einer im Laufe des laufenden Zyklus vorgenommenen anfänglichen Schätzung ($To_{p,i,n,r}$) aufgrund der Beziehung ergibt, wobei h ein Aktualisierungskoeffizient ist:

$$T_{p,i,n,r} = (1-h)T_{p,i,n-1,r} + hTo_{p,i,n,r}$$

**Claims**

1. A method for monitoring active seismic activity of an underground formation (1) allowing a separation of induced microseismic signals from seismic signals emitted in the context of active seismic monitoring operations of said underground formation under development, including performing seismic recording cycles with the emission of seismic waves in the formation by coupling at least one seismic source (Si) therewith, receiving signals sent by the formation in response to the emission of seismic waves, recording signals received by at least one seismic sensor (2), **characterized in that** the induced microseismic signals and the emitted seismic signals are obtained only during the active seismic monitoring operation, and **in that**:

   - a reference spectral model is formed from a weighted average of a spectral contribution of said seismic source (Si) for the current cycle and spectral contributions of said seismic source (Si) for the previous recording cycles, at the emitted fundamental frequencies and their respective harmonics;

- on the recordings, the induced microseismic signals are separated from the seismic signals resulting from the active monitoring operations, by isolating their contribution compared with said spectral reference model; and
- the microseismic signals are reconstituted by inversion in the time domain.

2. The method according to claim 1, wherein several seismic sources (Si) are coupled that simultaneously emit signals that are orthogonal relative to one another so as to form a composite vibrating signal, recorded signals are processed so as to separate the respective contributions of the seismic sources to the received signals and to reconstruct the seismograms equivalent to those that would be obtained by actuating the seismic sources separately.

3. The method according to claim 1 or 2, **characterized in that** the spectral contribution of the microseismic signals to the spectrum of the received signals is obtained by subtracting the amplitude and phase values associated with said reference spectral model, from the amplitude and phase of the spectrum associated with the recordings.

4. The method according to one of the preceding claims, **characterized in that** the current spectral model is formed by extrapolation or interpolation from the frequency spectrum from adjacent spectral values.

5. The method according to one of claims 2 to 4, **characterized in that** it includes the following steps:

a) for each recording n of a recording cycle p, the respective contributions ($C_{p,i,n}$) of the different sources to the fundamental frequencies are calculated;
b) the ratio ($E_{p,n}$) of the contribution to said current spectral model ($M_{p,n}$) formed by updating a previous spectral model ($M_{p,n-1}$) from frequencies emitted during said previous recording (n-1) as well as their harmonics is next calculated;
c) the part ($A_{p,n}$) of the recording n of the cycle p is deduced, which can be associated with the active seismic monitoring operations;
d) the part ($P_{p,n}$) of the recording n of the cycle p is deduced, strictly pertaining to the passive microseismic activity; and
e) the seismograms that can be associated with the active seismic monitoring operations are formed by inversion in the time domain of the respective spectral contributions ($C_{p,i,n}$) of each of the seismic sources (Si) to the fundamental frequencies and their harmonics, after completion of a measurement cycle; and
f) the underlying microseismic signals contained in the recordings are formed by inversion in the time domain, from the part ($P_{p,n}$) pertaining to the passive microseismic activity.

6. The method according to claim 5, **characterized in that** the spectral contribution ($C_{p,i,n}$) is obtained by multiplying a transfer function ($T_{p,i,n,r}$) between a characteristic wavelet of the source and the seismograms associated with the receiver r, by a characteristic wavelet of the source.

7. The method according to claim 6, **characterized in that** said transfer function is continuously updated.

8. The method according to claim 7, **characterized in that** the update of said transfer function ($T_{p,i,n,r}$) is obtained during a current cycle from an estimate ($T_{p,i,n-1,r}$) done during a previous cycle and an initial estimate ($To_{p,i,n,r}$) done during the current cycle by the relationship with h being an update coefficient:

$$T_{p,i,n,r} = (1-h)T_{p,i,n-1,r} + hTo_{p,i,n,r}$$

## FIG.1

## FIG.2

**FIG.3**

**FIG.4**

## FIG.5

$R_{p,n}$

$C_{p,i,n}$

$M_{p,n}$

$E_{p,n}$

$A_{p,n}$

$P_{p,n}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 591037 A
- US 5461594 A
- FR 2593292
- US 4775009 A
- FR 2728973
- US 5724311 A
- FR 2775349

- EP 748457 A
- US 6182012 B
- FR 2805051
- FR 2791780
- US 6338394 B
- US 6442489 B